**Europäisches Patentamt**

**European Patent Office**

**Office européen des brevets**

(11) Numéro de publication: **0 027 397**

**A1**

(12)

# DEMANDE DE BREVET EUROPEEN

(21) Numéro de dépôt: **80401359.7**

(22) Date de dépôt: **24.09.80**

(51) Int. Cl.³: **B 62 D 55/06**
**B 62 D 55/10, E 02 F 9/02**

(30) Priorité: **12.10.79 FR 7925490**

(43) Date de publication de la demande:
**22.04.81 Bulletin 81/16**

(84) Etats Contractants Désignés:
**BE DE FR GB IT**

(71) Demandeur: **POCLAIN**

**F-60330 Le Plessis-Belleville(FR)**

(72) Inventeur: **Dion, Daniel Jacques**
**29, avenue des Alouettes**
**Saint-Pathus F-77230 Dammartin-en-Goele(FR)**

(72) Inventeur: **Ranini, Daniel Gérard**
**11, avenue des Américains**
**F-77910 Varreddes(FR)**

(74) Mandataire: **Hoisnard, Jean-Claude et al,**
**Cabinet Beau de Lomenie 55, rue d'Amsterdam**
**F-75008 Paris(FR)**

(54) **Châssis porteur d'un engin mobile, tel qu'une pelle hydraulique.**

(57) L'invention est relative au châssis d'un engin, constitué par un bâti central 2 assemblé à deux longerons 3.

Après assemblage aux deux longerons 3, le bâti central 2 constitue une poutre comprenant une plaque inférieure 30, une plaque supérieure 31, deux plaques transversales 32 et deux plaques longitudinales (12-16), ces plaques étant assemblées les unes aux autres:
  - chaque plaque 32 aux plaques 31, 30 et 12 - 16,
  - les plaques supérieure 31 et inférieure 30 aux plaques longitudinals 12 - 16, de manière à constituer un caisson fermé 48.

Une application est la réalisation d'un châssis d'une pelle hydraulique.

./...

Fig. 4

Châssis porteur d'un engin mobile, tel qu'une pelle hydraulique.

Dans le domaine des engins de travaux publics, on connaît déjà de nombreux engins mobiles dont le châssis porteur est constitué par l'assemblage d'un bâti central à deux longerons longitudinaux.

Il convient de réaliser ces divers éléments de manière à leur conférer une grande résistance mécanique, car la totalité des efforts de réaction du sol sur le châssis agit sur ce dernier.

Selon les constructions connues, le bâti central et sa liaison avec les longerons constituent les points faibles des structures existantes.

L'invention, en proposant un nouveau type de châssis, a notamment pour but d'éliminer les points faibles précités.

Elle a donc pour objet un châssis porteur d'un engin mobile, tel qu'une pelle hydraulique, constitué par un bâti central assemblé à deux longerons latéraux longitudinaux.

Après assemblage aux deux longerons, le bâti central constitue une poutre comprenant :

- une plaque inférieure externe sensiblement horizontale,

- une plaque supérieure externe sensiblement horizontale,

- deux plaques transversales externes sensiblement verticales, et,

- dans la zone des longerons, deux plaques longitudinales externes, ces diverses plaques étant assemblées les unes aux autres :

- chaque plaque transversale externe à la plaque supérieure, à la plaque inférieure, et à chacune des plaques longitudinales,

- en outre, la plaque supérieure à chacune des plaques longitudinales externes et la plaque inférieure également à chacune des plaques longitudinales externes,

de manière à constituer au moins un caisson fermé délimité, d'une part, par les plaques inférieure et supérieure externes,
d'autre part, par les deux plaques transversales externes.

Les avantageuses dispositions suivantes sont, en outre,
de préférence, adoptées :

- les plaques longitudinales externes du bâti central
sont constituées par les longerons eux-mêmes ;

- l'engin comportant une tourelle montée sur le bâti
central, pivotante par rapport au châssis autour d'un axe sensiblement vertical, au moyen d'une virole solidaire dudit bâti central, ladite virole est montée sur un appui de virole constitué
par une tôle qui s'étend entre les plaques inférieure et supérieure externes du bâti central et qui est assemblé auxdites
plaques ;

- l'appui de virole a une dimension longitudinale égale
à l'écartement des plaques transversales externes du bâti central
et est assemblé à chacune de ces plaques transversales externes
de manière à constituer au moins deux caissons fermés latéraux
disposés, chacun, du côté de l'appui de virole opposé à l'axe vertical de cet appui de virole et chacun délimité par les plaques
inférieure et supérieure externes du bâti central, par les deux
plaques transversales externes du bâti central, et, par l'une des
deux plaques longitudinales externes du bâti central et par ledit
appui de virole ;

- chaque longeron étant délimité par deux plaques longitudinales de longeron sensiblement verticales assemblées à une plaque supérieure de longeron, la plaque supérieure externe du bâti
central a une dimension transversale supérieure à la dimension
transversale de la plaque inférieure externe dudit bâti central,
cependant que la plaque inférieure externe du bâti central a ses
lisières longitudinales adjacentes aux plaques longitudinales
internes des longerons, et que la plaque supérieure externe du bâti central recouvre, au moins partiellement, la plaque supérieure
de chaque longeron ;

- chaque lisière longitudinale de la plaque inférieure
externe du bâti central, ainsi que chaque lisière longitudinale de la plaque supérieure externe dudit bâti central sont soudées aux longerons auxquelles elles sont assemblées ;

      - l'assemblage entre deux adjacentes desdites plaques ou tôles est réalisé par un cordon de soudure étanche ;

      - le ou les caissons fermés sont étanches ;

      - chaque longeron est principalement constitué par une tôle pliée selon une section droite en U inversé, les branches verticales du U constituant les sections des plaques longitudinales dudit longeron, et, la branche de liaison desdites branches verticales du U constituant la section de la plaque supérieure de ce longeron.

      L'invention sera mieux comprise, et des caractéristiques secondaires et leurs avantages apparaîtront au cours de la description d'une réalisation donnée ci-dessous à titre d'exemple.

      Il est entendu que la description et les dessins ne sont donnés qu'à titre indicatif et non limitatif.

      Il sera fait référence aux dessins annexés, dans lesquels :

      - la figure 1 est une vue perspective d'une pelle hydraulique comportant un châssis conforme à l'invention ;

      - la figure 2 est une vue perspective du seul châssis de la pelle de la figure 1 ;

      - la figure 3 est une coupe suivant III-III de la figure 4, du châssis de la figure 2 ;

      - la figure 4 est une coupe suivant IV-IV de la figure 3 ;

      - la figure 5 est une coupe suivant V-V de la figure 3 ;

      - les figures 6 et 7 sont des coupes suivant VI-VI et VII-VII, respectivement, de la figure 3.

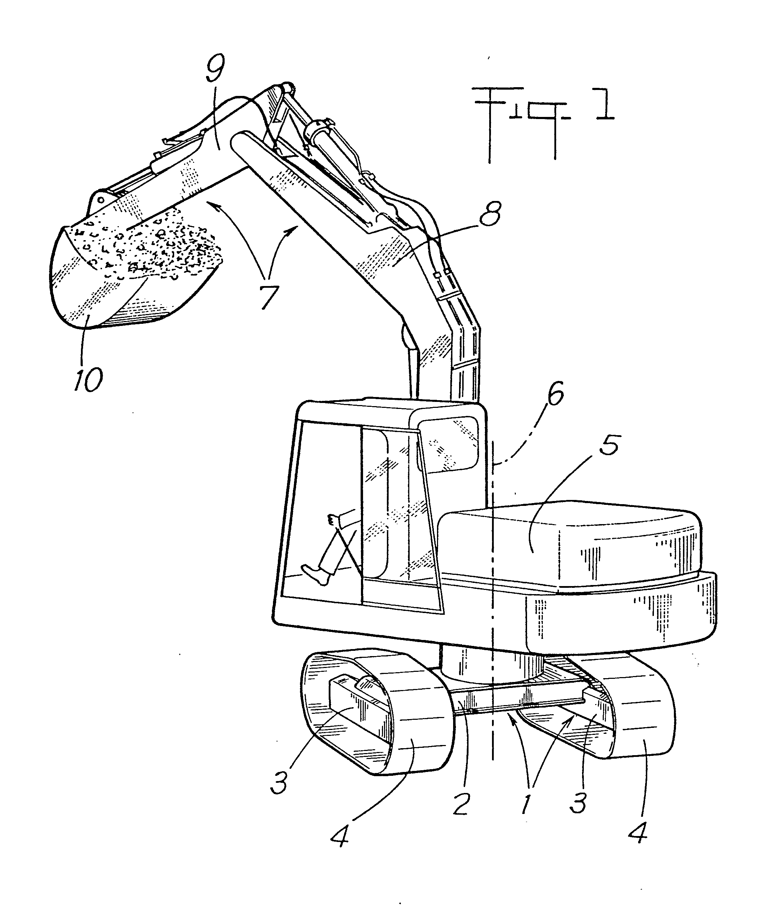

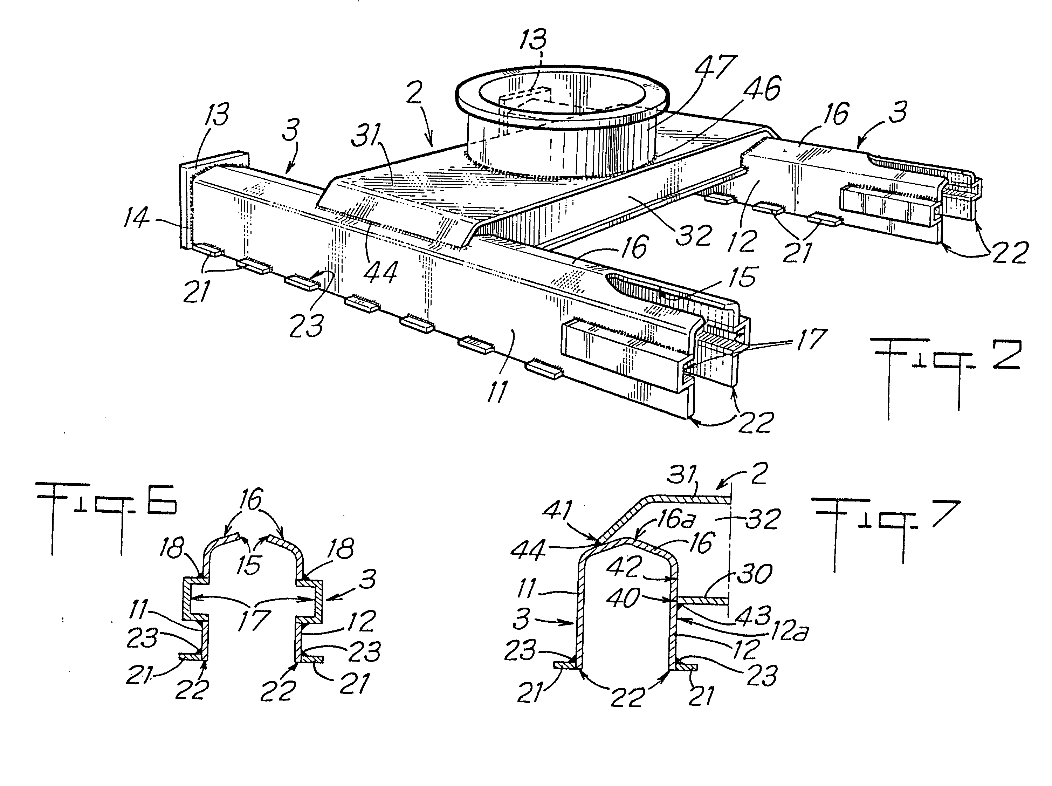

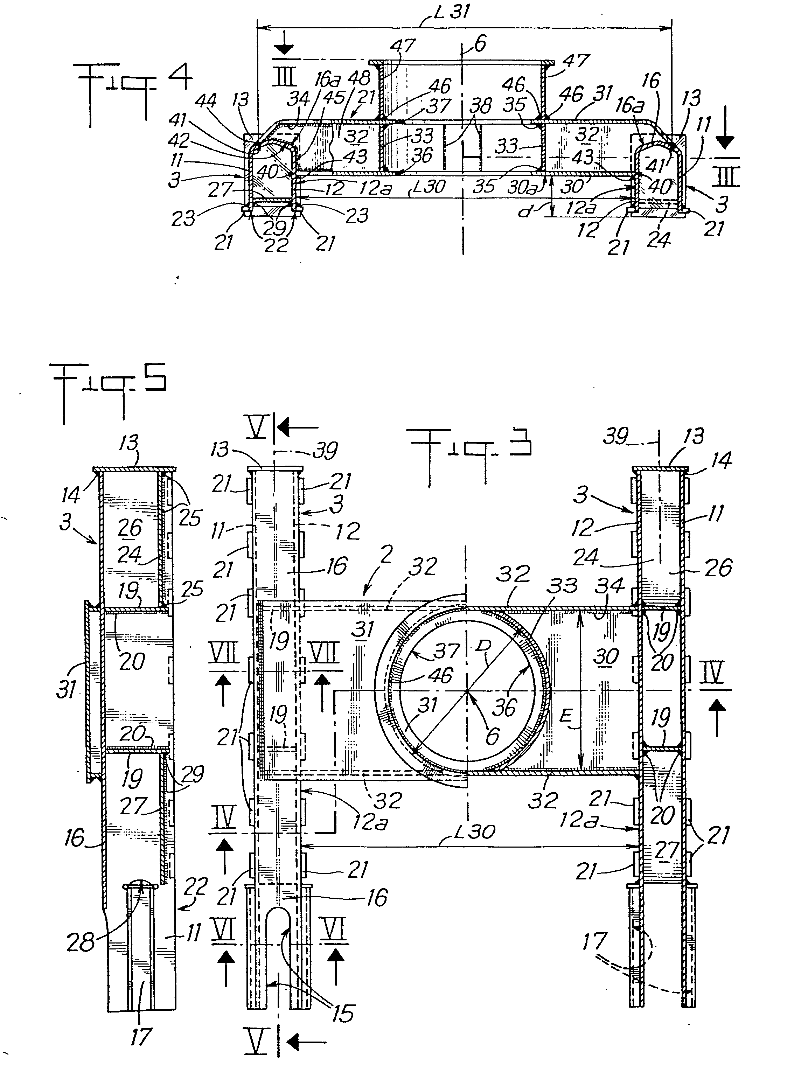

      La figure 1 représente une pelle hydraulique comportant un châssis porteur 1 conforme à l'invention. Selon une disposition classique, le châssis porteur est constitué par un bâti central 2 assemblé avec deux longerons latéraux 3. Ces derniers supportent les organes de déplacement de la pelle, constitués, dans l'exemple représenté, par des chenilles 4. Une tourelle 5 est montée sur le bâti central 2, pivotante autour d'un axe vertical 6. L'équipement de travail 7 de la pelle est attelé à la tourelle 5 et comporte de manière également connue, une flèche 8, un balancier 9 et un godet de creusement 10.

Chaque longeron 3 est constitué par une tôle pliée en un U inversé et comportant donc deux flancs réunis par une plaque supérieure 16. Les flancs sont parallèles, s'étendent longitudinalement, horizontalement, et sont contenus dans des plans verticaux : ce sont le flanc externe 11 et le flanc interne 12. Une plaque verticale transversale 13 est soudée (14) aux lisières de l'une des extrémités des flancs et de la plaque supérieure de chaque longeron.

Une encoche longitudinale 15 est ménagée dans la plaque supérieure 16 dans la zone de l'autre extrémité et permet le montage d'une roue de tension de la chaîne d'entraînement de la chenille 4 supportée par le longeron correspondant. Des glissières horizontales 17 sont, en outre, fixées par soudure (18) aux flancs externe 11 et interne 12 dans la zone de ladite autre extrémité, s'étendent horizontalement, et permettent un montage coulissant par rapport au longeron de l'axe de rotation de cette roue de tension de chaîne.

On notera également la présence de deux plaques verticales transversales 19, qui sont contenues dans le U de chaque longeron, dont le profil épouse la section de ce U, qui sont soudées (20) audit longeron et qui, ainsi, forment des goussets de renforcement du longeron.

De petits goussets 21 sont disposés horizontalement par paire, à intervalles réguliers, le long des lisières inférieures 22 des flancs externe 11 et interne 12 et sont soudés (23) auxdits flancs, constituant les éléments de montage des galets supports des chenilles 4.

Enfin, une plaque horizontale 24 est disposée à la partie inférieure de l'extrémité de chaque longeron délimitée par la plaque transversale 13, s'étend entre cette plaque 13 et la plaque transversale 19 la plus proche, sur environ le quart (1/4) de la longueur du longeron, et est soudée (25) auxdites tôles 13 et 19, et aux flancs 11 et 12, contribuant à réaliser un caisson fermé 26 d'extrémité du longeron. Une autre plaque horizontale 27 est également disposée à la partie inférieure de chaque longeron, et s'étend sur environ un quart (1/4) de la longueur du longeron, vers l'autre extrémité, à partir de l'autre plaque transversale 19, jusqu'approximativement l'aplomb du fond 28 des glissières 17. Cette plaque est soudée (29) à cette autre plaque 19 et aux flancs 11 et 12. Naturellement, les deux plaques 24 et 27 coopèrent à la réalisation d'un longeron présentant une résistance mécanique satisfaisante.

Le bâti central 2 est plus particulièrement constitué par des plaques horizontales inférieure 30 et supérieure 31, par deux plaques transversales verticales 32, parallèles, et par deux plaques semi-cylindriques 33, disposées verticalement. Les plaques transversales 32 s'étendent entre les plaques inférieure 30 et supérieure 31 auxquelles elles sont soudées (34). De même, les plaques semi-cylindriques 33 s'étendent également entre les plaques inférieure 30 et supérieure 31 et y sont soudées (35). Elles constituent, à elles deux, un appui de virole sensiblement cylindrique, coaxial à l'axe 6 et entourant des trous 36 et 37 ménagés dans les parties centrales des plaques inférieure 30 et supérieure 31. A noter enfin que les lisières verticales des plaques semi-cylindriques 33 sont soudées (38) aux plaques transversales 32 avec lesquelles elles sont en contact, l'écartement $\underline{E}$ des plaques transversales 32 n'étant que de peu inférieur au diamètre $\underline{D}$ des plaques semi-cylindriques 33.

La dimension transversale L30 de la plaque inférieure 30, mesurée perpendiculairement aux axes longitudinaux parallèles 39 des deux longerons 3 est inférieure à la dimension transversale correspondante L31 de la plaque supérieure 31. La dimension L30 est d'ailleurs égale à l'écartement des faces externes 12$\underline{a}$ des flancs internes 12 des deux longerons. Ainsi, du fait de cette différence des dimensions transversales (L30 $<$ L31), le bâti central 2 peut être, et est assemblé avec les longerons 3, par le rapprochement, jusqu'à leur mise en contact, des éléments suivants :

- lisières longitudinales horizontales 40 de la plaque inférieure 30 avec les faces externes 12$\underline{a}$ des flancs internes 12 des longerons,

- lisières longitudinales horizontales 41 de la plaque supérieure 31 avec les faces externes supérieures 16a de la plaque supérieure 16 des longerons,

- lisières 42 des extrémités des plaques transversales 32 du bâti central avec lesdites faces 12a et 16a, et par le soudage de ces lisières et de ces faces :

. soudure 43 des lisières 40 de la plaque inférieure 30,

. soudure 44 des lisières 41 de la plaque supérieure 31,

. soudure 45 des lisières 42 des plaques transversales 32.

Il faut également noter que le bâti central est complété par la mise en place, et fixation par soudure 46, au-dessus des plaques semi-cylindriques 33, de plaques 47 de même forme et qui les prolongent, pour constituer le support proprement dit du rond à galets réalisant le montage pivotant de la tourelle 5 sur le châssis 1, autour de l'axe 6.

Les avantages inhérents à la construction proposée vont maintenant être exposés.

Tout d'abord, le bâti central 2 est une structure très résistante, bien que relativement légère. Il doit être noté, sur ce point, que l'assemblage réalisé aboutit à la constitution de deux caissons vides entièrement fermés 48, et de plus rendus étanches par la généralisation du soudage. Chaque caisson 48 est situé de part et d'autre de l'appui de virole formé par les plaques semi-cylindriques 33, et est délimité par les plaques inférieure 30, supérieure 31, transversales 32, une plaque semi-cylindrique 33 et la plaque en U constitutive du longeron correspondant. Par ailleurs, du fait que le caisson est vide, son poids est relativement faible.

A noter que l'appui de virole, constitué par les plaques semi-cylindriques 33 est partie intégrante de la structure du caisson et n'est pas simplement posé sur le caisson, auquel cas il ne participerait évidemment pas à l'obtention de sa résistance mécanique.

Par ailleurs, le bâti central est rendu solidaire des longerons 3 par, principalement, deux longues soudures 43 et 44 qui s'étendent le long de la totalité de la dimension longitudinale du bâti 2. Ainsi, les efforts extérieurs transmis d'un longeron 3 au bâti 2, ou inversement, traversent-ils une zone de fixation de grande dimension, ce qui permet l'élimination des risques de ruptures du châssis porteur dans la zone des liaisons longerons-bâti central.

De plus, du fait des différences de dimensions transversales des plaques inférieure 30 et supérieure 31 du bâti central, la plaque supérieure 31 recouvre en partie chaque longeron, cependant que la face inférieure 30a de la plaque inférieure 30 est surélevée d'une distance d par rapport au niveau inférieur de chaque longeron 3. On obtient ainsi une "garde au sol" intéressante du bâti central.

Enfin, on aura noté la simplicité de réalisation de chaque longeron 3 à partir d'une plaque conforme en un U inversé.

L'invention n'est pas limitée à la réalisation représentée, mais en couvre au contraire toutes les variantes qui pourraient lui être apportées sans sortir de son cadre, ni de son esprit.

R E V E N D I C A T I O N S

1. Châssis porteur d'un engin mobile, tel qu'une pelle hydraulique, constitué par un bâti central (2) assemblé à deux longerons latéraux longitudinaux (3),
caractérisé en ce qu'après assemblage aux deux longerons, le bâti central constitue une poutre comprenant :

- une plaque inférieure externe (30) sensiblement horizontale,

- une plaque supérieure externe (31) sensiblement horizontale,

- deux plaques transversales externes (32) sensiblement verticales, et,

- dans la zone des longerons, deux plaques longitudinales externes (12 - 16),
ces diverses plaques étant assemblées les unes aux autres :

- chaque plaque transversale externe (32) à la plaque supérieure (31), à la plaque inférieure (30), et à chacune des plaques longitudinales (12 - 16),

- en outre, la plaque supérieure (31) à chacune des plaques longitudinales externes (16) et la plaque inférieure (30) également à chacune des plaques longitudinales externes (12),
de manière à constituer au moins un caisson fermé (48) délimité, d'une part, par les plaques inférieure (30) et supérieure (31) externes, d'autre part, par les deux plaques transversales externes (32).

2. Châssis porteur selon la revendication 1, caractérisé en ce que les plaques longitudinales externes (12 - 16) du bâti central sont constituées par les longerons (3) eux-mêmes.

3. Châssis porteur selon l'une quelconque des revendications 1 et 2, caractérisé en ce que, de manière connue en soi, l'engin comportant une tourelle (5) montée sur le bâti central (2), pivotante par rapport au châssis autour d'un axe (6) sensiblement vertical, au moyen d'une virole (47) solidaire (46) dudit bâti central (2), et,
en ce que ladite virole (47) est montée sur un appui de virole (33) constitué par une tôle qui s'étend entre les plaques inférieure (30) et supérieure (31) externes du bâti central et qui est assemblé (35) auxdites plaques.

4. Châssis porteur selon la revendication 3, caractérisé en ce que l'appui de virole (33) a une dimension longitudinale égale à l'écartement des plaques transversales externes du bâti central et est assemblé à chacune de ces plaques transversales externes (32) de manière à constituer au moins deux caissons fermés latéraux (48) disposés, chacun, du côté de l'appui de virole (33) opposé à l'axe vertical (6) de cet appui de virole et chacun délimité par les plaques inférieure (30) et supérieure (31) externes du bâti central, par les deux plaques transversales externes (32) du bâti central, et, par l'une (12 - 16) des deux plaques longitudinales externes du bâti central et par ledit appui de virole (33).

5. Châssis porteur selon l'une quelconque des revendications 1 à 4, caractérisé en ce que, de manière connue en soi, chaque longeron (3) est délimité par deux plaques longitudinales (12 - 11) de longeron sensiblement verticales assemblées à une plaque supérieure (16) de longeron, en ce que la plaque supérieure externe (31) du bâti central a une dimension transversale (L31) supérieure à la dimension transversale (L30) de la plaque inférieure externe (30) dudit bâti central, et,

en ce que la plaque inférieure externe (30) du bâti central a ses lisières longitudinales (40) adjacentes aux plaques longitudinales internes (12) des longerons (3), cependant que la plaque supérieure externe (31) du bâti central recouvre, au moins partiellement, la plaque supérieure (16) de chaque longeron (3).

6. Châssis porteur selon l'une quelconque des revendications 1 à 5, caractérisé en ce que chaque lisière longitudinale (40) de la plaque inférieure externe (30) du bâti central, ainsi que chaque lisière longitudinale (41) de la plaque supérieure externe (31) dudit bâti central sont soudées (43, respectivement 44) aux longerons (3) auxquelles elles sont assemblées.

7. Châssis porteur selon l'une quelconque des revendications 1 à 6, caractérisé en ce que l'assemblage entre deux adjacentes desdites plaques ou tôles est réalisé par un cordon de soudure étanche.

8. Châssis porteur selon l'une quelconque des revendications 1 à 7, caractérisé en ce que le ou les caissons fermés sont étanches.

9. Châssis porteur selon l'une quelconque des revendications 1 à 8, caractérisé en ce que chaque longeron est principalement constitué par une tôle pliée selon une section droite en U inversé, les branches verticales (11 - 12) du U constituant les sections des plaques longitudinales dudit longeron, et, la branche de liaison (16) desdites branches verticales du U constituant la section de la plaque supérieure de ce longeron.

Fig. 1

Fig. 2

Fig. 7

Fig. 5

Fig. 6

Fig. 4

Fig. 5

Fig. 3

Office européen
des brevets

**RAPPORT DE RECHERCHE EUROPEENNE**

Numéro de la demande

EP 80 40 1359

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendica-tion concernée | |
| | DE - C - 931 748 (DEMAG) <br><br> ---- | 1 | B 62 D 55/06<br> 55/10<br>E 02 F  9/02 |

**DOMAINES TECHNIQUES RECHERCHES (Int. Cl. ³)**

B 62 D
E 02 F

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

X Le présent rapport de recherche a été etabli pour toutes les revendications

| Lieu de la recherche | Date d'achèvement de la recherche | Examinateur |
|---|---|---|
| La Haye | 21-11-1980 | SCHMAL |

OEB Form 1503.1   06.78